# EUROPEAN PATENT APPLICATION

(11) **EP 1 629 708 A1**
(43) Date of publication of application: **01.03.2006**
(21) Application number: 03720589.5
(22) Date of filing: 29.04.2003
(51) Int. Cl.: A01D 46/26

(54) **SUPPORT AND GUIDE ASSEMBLY FOR A ROD WHICH CAN PERFORM AN AXIAL RECIPROCATING MOVEMENT**

(71) Applicant: Gurri Molins, Josep, 08140 Caldes de Montbui (Barcelona) (ES)
(72) Inventor: Gurri Molins, Josep, 08140 Caldes de Montbui (Barcelona) (ES)
(74) Representative: Gislon, Gabriele
(86) International application number: PCT/ES2003/000188
(87) International publication number: WO 2004/095907

(57) **Abstract**

The invention relates to a support and guide assembly for a rod which can perform an axial reciprocating movement. The inventive assembly comprises a tubular structure (4) which is formed by two opposing co-axial tubular walls (1, 2) which are joined by two or more radially-extending longitudinal ribs (11). The aforementioned tubular structure houses linear guide means for a rod (3) which is actuated by an actuating assembly (17) that is connected to a support structure (13) in order to perform an axial reciprocating movement. The assembly comprises a joint which rotates the rod (3) in relation to the actuating assembly (17), means for pivot fixing the tubular structure (4) to the support structure (13) and rotation coupling means for coupling the rotation of the tubular structure (4) to the rotation of the rod (3), thereby enabling the axial reciprocating movement of the rod (3).

## Description

### Field of the invention

This invention refers to a supporting and guiding unit for a rod having a reciprocating movement in axial direction, comprising a tubular structure surrounding and protecting said rod, formed by two tubular walls apart from each other and with two or more longitudinal radially extending ribs connecting the first tubular wall to the second tubular wall.

The invention is applicable in particular although not exclusively to a portable beating down device for mechanically harvesting, designed to the task of harvesting tree fruits such as olives and almonds.

### Background of the invention

Generically, this kind of apparatuses comprises a supporting structure, such as a frame, housing or box, to which a motor or power supply is connected by means of a centrifugal coupling to a vibration generating mechanism which is adapted to convert the rotating motion of the motor into an alternative linear vibrating motion. A rod provided with at least a portion linearly guided with respect to said supporting structure is connected to the outlet of said mechanism generating the vibration and a driving member is fixed on a free distal end of said rod. Often the rod sustains punctual overstresses which carry brisk rotating, bending or crippling motions of the rod, or a match of them, similar to flappings, which can affect the physical safety of the operator and/or provoke the breakage of the rod or of another mechanical element of the apparatus.

The application for an utility model ES-A-1043090 discloses a coupling device with limitation of overstress for a rod installed on a vibrating harvesting machine as above disclosed. In said application for an utility model, a coupling part is integrated between the two parts of the rod or between one end thereof and a vibration transmitting element of the machine which, and this is what the invention contributed to it, comprises a section which can be broken when a given threshold of bending stress is exceeded, as well as a retaining element already mentioned in the prior documents (mentioned in said application for an utility model) which is broken if the tractive stresses are significant, therefore protecting the operator from the possible crippling of the rod, preventing at same time that this later is broken. Although this solution appeared fully effective, in the practice, it has the drawback that it obliges to dismount the coupling and to replace the non-recoverable retaining element, which means an unwanted loss of time.

### Summary of the invention

This invention suggests a more effective system as an alternative to said prior document. It consists instead of acting against the overstresses provoked on and by the rod, as it was said in above background, in decreasing their extent by protecting the rod with an external tubular structure, which at same time acts as a linear guide for it. This way the weight and the size of the rod are decreased. It is possible because, and this is the inventive part of this application for a patent, said tubular structure surrounding the rod is formed by two tubular walls, radially joined by a series of longitudinal ribs which make that the structure can be made of a relatively lightweight material and with a not too thick wall, which carry a quite positive ratio between the lightweight of the tubular structure and the moment of inertia or bending strength thereof. Due to the lightweight of said tubular structure it can be extended covering a significant part of the rod, so that the bare part of the rod, which in above mentioned background occupied virtually the full machine, has here a length which is less than a third part of the unit total length. At least the guided part of the rod can be thin and of a material having a lower weight than those used until now, because it is protected against the bending and crippling stresses by said tubular structure and this lower weight consequently will carry also much lower inertias which means a lower transference of vibrations to the machine frame and to the operator.

The advantages this invention offers are quite significant because not only a best protection for the operator physical safety is provided but it is achieved without any part of the unit is broken, on the contrary to what occurs with above background and, in addition a lower weight and a more easy use are provided to the operator because the vibrations he could sustain are significantly decreased thanks to this invention.

The supporting and guiding unit for a rod provided with a reciprocating movement in axial direction according to this invention in addition comprises a link which provides a rotation of the rod with respect to the driving unit and therefore with respect to the supporting structure, rotating fastening means for the tubular supporting structure, rotating means for fastening the tubular structure on said supporting structure and rotation linking means to link the rotation of the tubular structure to the rotation of the rod , while allowing at same time said reciprocating movement in axial direction of the rod. Thanks to this, an operator can control the orientation of the driving means fastened at the distal end of the rod by simply hand rotating the tubular structure without it is required to change the orientation of all the unit of the machine. Advantageously, a handle fixed on the tubular support allows to easier and more accurately control said orientation.

### Brief description of the drawings

Other characteristics of the invention will be more apparent from the description below of an exemplary embodiment, which is illustrated in the drawings appended, and which must be taken as an illustrating and not limiting purpose.

An exemplary embodiment is explained below, with reference to the appended drawings, in which:
Fig. 1 shows, in a side elevation schematic partly sectional view, a portable beating down device in which the unit of this invention is implemented;
Fig. 2 is an enlarged sectional view of a portion of the rod and the tubular structure of the unit of Fig. 1;
Fig. 3 is a cross sectional view of the rod and the tubular structure taken through the plane III-III of Fig. 2;
Fig. 4 is an enlarged part sectional view in which the fastening means of the tubular structure to the supporting structure can be seen in closed position;
Fig. 5 shows same elements as Fig. 4 but the fastening means being in open position;
Fig. 6 shows an enlarged part sectional view of the rotation linking means;
Fig. 7 shows a cross sectional view taken through the plane VII-VII of Fig. 6; and
Fig. 8 shows a cross sectional view taken through the plane VIII-VIII of Fig. 7.

### Detailed description of an exemplary embodiment

The figures show the supporting and guiding unit for a rod provided with a reciprocating movement in axial direction according to this invention applied to a portable mechanical harvesting beating down apparatus comprising a supporting structure 13 which houses and supports a driving unit 17 which includes a motor connected to a vibration generating mechanism adapted to drive a rod 3, bringing it a to and fro or reciprocating vibration motion in the direction of its longitudinal axis, being linearly guided in that direction with respect to the supporting structure 12. The rod 3 is significantly long and is ended in a driving member such as a hook 22, adapted to be fastened to a branch or secondary trunk of a tree in order to transmit the rod 3 vibration to it.

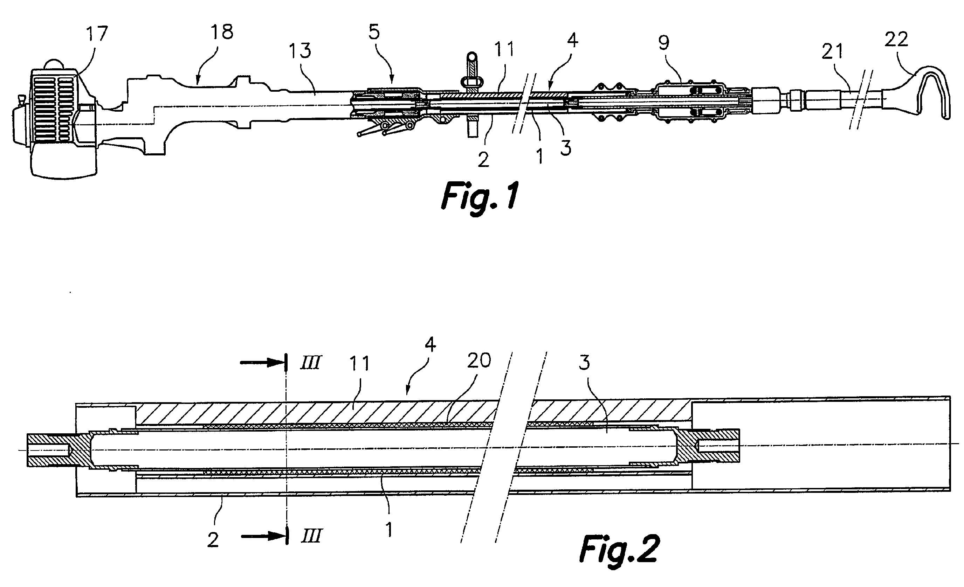

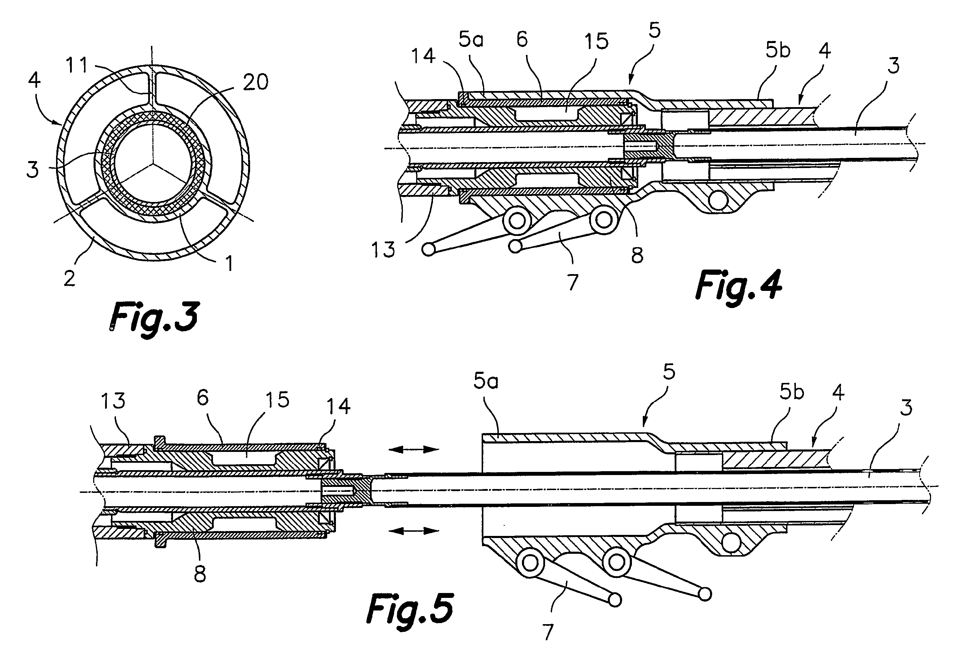

Fig. 2 and 3 show with more details a tubular structure 4 forming part of the supporting and guiding unit of the rod according to this invention said tubular structure 4 comprises at least a first tubular wall 1 within which are arranged linear guiding means to guide the rod 3 to move to and fro in axial direction and fastening means to connect said tubular structure 4 with a supporting structure 13, such as for example a frame or a box, of a driving unit 17 of said rod 3. said tubular structure 4 comprises a second tubular wall 2 coaxially arranged around said first tubular wall 1 apart from it and two or more longitudinal ribs 18 (in the exemplary embodiment shown in Fig. 2 and 3, these ribs are three), distributed equidistant which radially extend connecting the first tubular wall 1 to the second tubular wall 2, as shown in Fig. 2 and 3. To allow that the rod 2 easily slides within the tubular structure 4, a core of low-friction sliding material 20 is arranged for that purpose between the first tubular wall 1 of the tubular structure 4 and the rod 3 (see Fig. 3).

The said configuration of the tubular structure 4, that is to say the fact that it is formed by two walls joined by a series of ribs 18, allows that the structure can be made of a relatively lightweight material and with not too thick walls which carry a very good ratio between lightweight of the tubular structure 4 and moment of inertia or bending strength.

Fig. 4 and 4 show said fastening means of the tubular structure 4 to the tubular structure 13 which provide a rotation in either direction of the tubular structure 4 with respect to said supporting structure 13 and comprise an outer fastening structure 5 which has a glasslike shape 5a at one end and at the other end which is coupled, for example socketed, on the tubular structure 4. A sleeve 6 is rotatably mounted on a supporting part 8 joined by one end to the supporting structure 13. said sleeve 6 has a low coefficient of friction with respect to said supporting part 8 on which it rotates which is achieved depending on the exemplary embodiment used, either because the sleeve 6 is of a sliding material, or it is coated with a sliding material, or because, according to the exemplary embodiment shown in the figures, said sleeve 6 is of rigid material and comprises internal circumferential slots 14 in which are housed annular elastic joints applied against the supporting part 8. said annular elastic joints act as dynamic supporting elements while they apply a slight rotation braking on the tubular structure 4. Eventually, between the sleeve 6 and the supporting part 8, gaps 15 could exist which would be filled with a lubricating material, such as grease or oil, and in order that said lubricating material does not overflow sealing elastic joints would be included similar to that above disclosed.

Coupling of the outer fastening structure 5 joined to the tubular structure 4 to the sleeve 6 is carried out by means of a quick locking system which surrounds the sleeve 6 consisting in at least a clamp driven by a lever 7. Obviously, the locking system could be any other of those known in the art of this field, different to that mentioned, such as for example one based on clamps.
All above explained refers to the means which make that the tubular structure 4 can rotate with respect to the supporting structure 13. As it was already commented above, the rod 3 is provided with a to and fro linear motion, which is achieved through the driving unit 17 which can include a conventional device selected among, for example, one of those disclosed in documents FR-A-2305927, US-A-3924390 and ES-A-1000253. It is necessary to point out that, in this invention, the rod 3 can also axially freely rotate with respect to the driving unit 17 and therefore, with respect to the supporting structure 13, using for this a conventional device designed to that purpose, such as for example that disclosed in the application for an utility model ES-A-1052281.

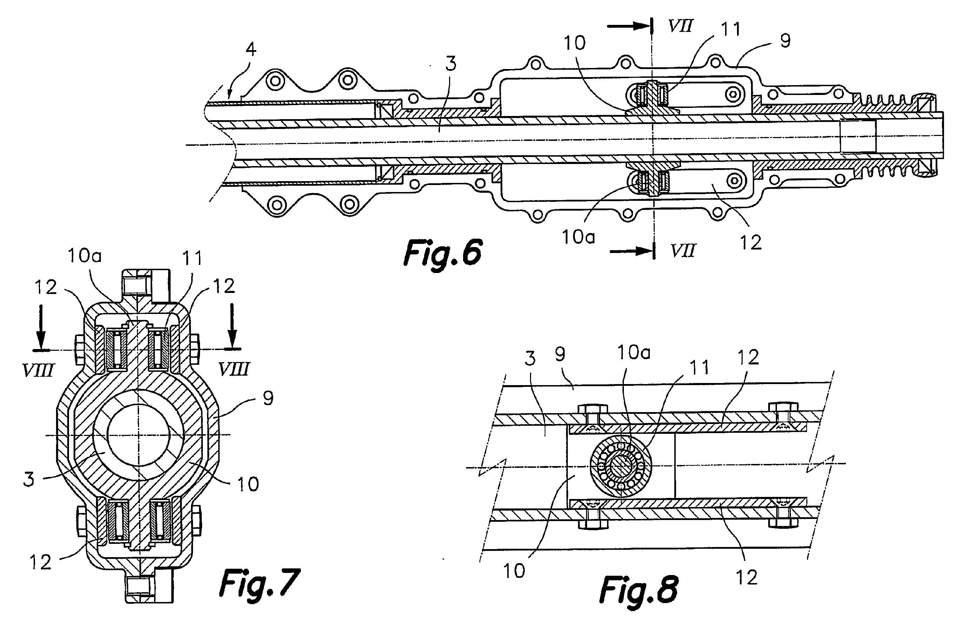

The device which allows the rotation of the rod 3 is not the object of this invention. On the contrary, an object is to achieve that its rotation is linked to the rotation of the above disclosed tubular structure 4. For this, (see fig. 6, 7 and 8) rotation linking means are shown which link the rotation of the tubular structure 4 to the rotation of the rod 3, allowing at same time said reciprocating movement in axial direction of the rod 3. said linking means comprise an outer structure 9 joined to the tubular structure 4 and which co-operates with an auxiliary element 10 linked to the rod 3 to define a guide in the to and fro direction.said outer structure 9, in an exemplary embodiment shown in Fig. 6, is divided into two half-half-box-shaped parts which catch within them the tubular structure 4 by clamping them. On the outer structure 9 two pairs of tracks 12 are fastened facing each other and parallel to each other and said auxiliary element 10 fastened to the rod 3 possesses two appendages 10a on which are sitting the rolling elements 11, such as bearings (see Fig. 8). Each of the rolling elements 11 is located between a respective pair of tracks 12 and arranged to roll along one or the other of the tracks 12 of the corresponding pair, limiting with it the rotation of the rod 3 with respect to the tubular structure 4 in one or the other direction, respectively. It is important that the tracks 12 are located at a distance wider that the diameter of the rolling element 11, providing a clearance between the rolling element 11 and the tracks 12, required in order that each rolling element 11 only touches one of the two tracks 12 associated to it and this way it can freely rotate. If it were not so, that is to say, if the rolling element 11 touches both tracks 12 at same time, the rolling element would be braked. In another exemplary embodiment (not shown) in which instead of rolling elements 11 sliding elements will be used, such as double faced slippers, such clearance between the tracks 12 and the sliding elements would not be required.

Although it has not been illustrated in the figures, the device linking the rotation could only comprise one pair of parallel tracks facing each other and a single rolling or sliding element arranged between them or two separated tracks and two respective rolling or sliding elements mounted on two appendages independent of the auxiliary element fastened on the rod.

The above explained rotation of the tubular structure 4 integral with that of the rod 3, will be carried out by an operator operating a handle 16 arranged on the tubular structure 4, which could have available a conventional vibration damping system to protect the operator from them, such as, for example the system proposed in the application for an utility model ES-A-1040858.

In this exemplary embodiment, the rod 3 is divided into two or more parts coupled to each other, which have a different wall thickness, diameter, material and weight depending on the requirement for each length. Such division makes it easy to carry and to divide the system into modules or fittings, which will make their exchange easy and that they are independent from each other, in the event that some of them sustains some damage or if it is required to replace it.

It is worth to point out that, with the unit of this invention, the length of the bare part of the rod 21 is less long than a third part of the unit total length, which gives an idea of the extent to which the rod 3 is protected either by the tubular structure 4, by the fastening structure 5 or by the external linking structure 9, which makes that its length which remains protected can be thinner and/or made of a more lightweight material than those used in above backgrounds because it is sustaining (bending, compressive , tractive, crippling etc.) stresses much lower than those it sustained before the proposal of the tubular structure 4 of this invention and such lower weight of the rod 3 will consequently carry also much lower inertias.

A man of the art could introduce changes and modifications to above exemplary embodiment without being out of the scope of this invention as it is defined in the claims appended.

## Claims

1. A supporting and guiding unit for a rod having a reciprocating movement in axial direction, of the kind comprising a tubular structure (4) with at least a first tubular wall (1) within which are arranged linear guiding means to guide a rod (3) driven to carry out a reciprocating movement in axial direction and fastening means to connect said tubular structure (4) to a supporting structure (13) housing a driving unit (17) connected to said rod (3), **characterised in that** the tubular structure (4) comprises a second tubular wall (2) coaxially arranged around said first tubular wall (1) at a distance from it and two or more radially extending longitudinal ribs (18) connecting said first tubular wall (1) with said second tubular wall (2).

2. Unit, according to claim 1, **characterised in that** it comprises a device which provides a rotation in both directions of the rod (3) with respect to the driving unit (17) and supporting structure (13), said fastening means to connect the tubular structure (4) to said supporting structure (13) being adapted to provide a rotation in both directions of the tubular structure (4) with respect to the supporting structure (13).

3. Unit according to claim 2, **characterised in that** it comprises rotation linking means to link the rotation of the tubular structure (4) to the rotation of the rod (3) allowing at same time said reciprocating movement in axial direction of the rod (3).

4. Unit, according to claim 2, **characterised in that** said fastening means comprise a sleeve (6) rotatably mounted on a supporting part (8) joined by one end to the supporting structure (13) and an outer fastening structure (5) coupled by one end (5b) to the tubular structure (4) and which has a glass-like shape (5a) at the other end coupled and fastened on said sleeve (6).

5. Unit, according to claim 4, **characterised in that** said end (5b) of the outer fastening structure (5) is socketed to the tubular structure (4).

6. Unit according to claim 4, **characterised in that** between the sleeve (6) and the supporting part (8) there exists spaces (15) which can be filled with a lubricating material selected from a group including grease and oil.

7. Unit, according to claim 4, **characterised in that** said sleeve (6) is of a sliding material.

8. Unit, according to claim 4, **characterised in that** said sleeve (6) is coated with a sliding material.

9. Unit, according to claim 4, **characterised in that** said sleeve (6) comprises internal circumferential slots (14) which house annular elastic joints applied against the supporting part (8) acting as a slight braking on the rotation of the tubular structure.

10. Unit, according to claim 4, **characterised in that** said outer fastening structure (5) has a locking system surrounding said sleeve (6)

11. Unit, according to claim 10, **characterised in that** said locking system is a quick locking system.

12. Unit, according to claim 11, **characterised in that** said quick locking system includes at least a clamp driven by a lever (7).

13. Unit, according to claim 3, **characterised in that** said rotation linking means comprise an outer structure (9) joined to the tubular structure (4) and which co-operates with an auxiliary element (10) linked to the rod (3) for defining a linear guide in the direction of the rod (3) reciprocating movement, said guide restricting the possibility of a relative rotation between the rod (3) and the tubular structure (4).

14. Unit, according to claim 13, **characterised in that** said outer structure (9) has at least two tracks (12) associated and said auxiliary element (10) comprises at least an appendage (10a) on which at least one rolling or sliding element (11) is mounted arranged to roll or slide along one and/or the other of said tracks (12).

15. Unit, according to claim 14, **characterised in that** said two tracks (12) are facing each other and parallel to each other, and the auxiliary element (10) with said appendage (10a) having a rolling or sliding element (11) is arranged between both tracks (12).

16. Unit, according to claim 14, **characterised in that** it comprises two pairs of tracks (12) facing each other and parallel to each other and two appendages (10a) with rolling or sliding elements (11) arranged between the two tracks (12) of each pair.

17. Unit, according to claim 14, **characterised in that** said two tracks (12) are separate and the auxiliary element (10) has two appendages (10a) with rolling elements (11) arranged to roll respectively on one and the other of the tracks (12).

18. Unit, according to claim 15 or 16, **characterised in that** said two tracks (12) of each pair are located at a distance wider than the diameter of the rolling element (11), providing a clearance between the rolling element (11) and the tracks (12) of the pair.

19. Unit, according to the claim 14, 15, 16 or 17, **characterised in that** said rolling element (11) is a bearing.

20. Unit, according to claim 14,15,16 or 17, **characterised in that** said sliding element is a double-faced slipper.

21. Unit, according to claim 13, **characterised in that** said outer structure (9) is divided in two half-box-shaped parts which catch within them an end of the tubular structure (4) by clamping them.

22. Unit, according to claim 1, **characterised in that** it comprises at least a handle (16) fastened on the tubular structure (4) for the joint rotation of the tubular structure (4) and the rod (3).

23. Unit, according to claim 1, **characterised in that** said linear guiding means for the rod (3) comprise a core of low-friction sliding material (20) arranged between said first tubular wall (1) and the rod (3).

24. Unit, according to claim 1, **characterised in that** said ribs (18) are distributed at equal angular distances around the longitudinal axis of the tubular structure (4).

25. Unit, according to claim 24, **characterised in that** said ribs (18) are three.

26. Unit, according to claim 1, **characterised in that** said rod (3) is divided into two or more parts coupled to each other by means of releasable couplings.

27. Unit, according to claim 26, **characterised in that** a bare part (21) of the rod (3) has a length lower than a third part of the total length of the rod (3).
